# EUROPÄISCHE PATENTSCHRIFT

(11) **EP 1 698 827 B1**
(45) Veröffentlichungstag und Bekanntmachung des Hinweises auf die Patenterteilung: **15.02.2017**
(21) Anmeldenummer: 06003394.1
(22) Anmeldetag: 20.02.2006
(51) Int. Cl.: F23G 5/50, F23N 3/00, F23N 5/00, F23C 9/08, F23L 7/00

(54) **Verfahren zum Verbrennen von Brennstoffen, insbesondere Abfall**
Process for burning fuels and more particularly wastes
Procédé pour brûler des combustibles et plus particulièrement des déchets

(30) Priorität: 04.03.2005 DE 102005009957
(43) Veröffentlichungstag der Anmeldung: 06.09.2006
(73) Patentinhaber: MARTIN GmbH für Umwelt- und Energietechnik, 80807 München (DE); MITSUBISHI HEAVY INDUSTRIES, LTD., Tokyo 108-8215 (JP)
(72) Erfinder: Martin, Johannes, 81675 München (DE); Gohlke, Oliver, Dr., 81377 München (DE); Takuma, Masao, Tokyo 142-0064 (JP); Kuranishi, Minoru, Yokohama-City 236-0052 (JP); Yanagisawa, Yoshio, Yokohama 240-0035 (JP)
(74) Vertreter: Castell, Klaus

(56) Entgegenhaltungen:
- EP-A1- 0 498 014
- EP-A1- 0 621 448
- EP-A2- 0 487 052
- WO-A1-99/06765
- WO-A1-03/083370
- DE-A1- 2 359 730
- DE-A1- 3 915 992
- JP-A- H11 218 314
- JP-A- 2002 267 132
- US-A- 4 510 873
- US-A- 4 838 183
- US-A- 5 261 337
- US-A- 5 606 924
- W SCHUMACHER, W SCHÄFERS: "Regelung der feurungsleistung bei Müllverbrennungsanlagen" ENTSORGUNGS PRAXIS, Bd. 6/91, 1. Juni 1991 (1991-06-01), Seiten 312-314, XP002616208
- W. SCHÄFERS, K. LIMPER: "Fortschritte bei der Feuerleistungsregelung für Hausmüllverbrennungsanlagen" SCHRIFTENREIHE WAR, Bd. 78, 31. Dezember 1994 (1994-12-31), Seiten 23-38, XP002616209 darmstadt
- D.O. Reinman: "Rostfeureungen zur Abfallverbrennung" 31. Dezember 1991 (1991-12-31), EF verlag , Berlin , XP002616210 * Seite 497 - Seite 500 * * Seite 497, Absatz 3; Abbildung 1 * * Seite 502 - Seite 505 * * Seite 504, Absatz 2 - Absatz 3 * * Seite 507 - Seite 517 * * Seite 509, Absatz 5 - Seite 511, Absatz 2 * * Seite 514, Absatz 6 *
- L & C Steinmüller Gmbh, Babcock Borsig Power Environment: "Betriebsanleitung Teil 2 für Verbrennungseinheit (Rostfeurung mit Dampferzeuger)" 6. März 2000 (2000-03-06), steinmüller , Gummersbach, DE , XP002616211 * Seite 16 *

## Beschreibung

Die Erfindung bezieht sich auf ein Verfahren zum Verbrennen von Brennstoffen, insbesondere Abfall, bei dem Primärverbrennungsgas von unten in die Brennstoffschicht und Sekundärverbrennungsgas oberhalb der Brennstoffschicht dem Abgasstrom zugeführt wird und bei Eintritt einer Erhöhung der Reaktionsrate bzw. Verbrennungsintensität der Sauerstoffmassenstrom des Primärverbrennungsgases gesenkt und der Sauerstoffmassenstrom des Sekundärverbrennungsgases erhöht wird.

Primärverbrennungsgas ist üblicherweise Umgebungsluft oder mit Sauerstoff angereicherte Umgebungsluft, die vor der Einführung in die Brennstoffschicht häufig erwärmt wird. Die Beimischung von Sauerstoff zur Umgebungsluft für die Bereitstellung von Primärverbrennungsgas wird zur Verstärkung der Verbrennungsintensität, Verringerung der Abgasmenge sowie insbesondere zur Erhöhung der Brennbetttemperatur und somit zur Verbesserung der Schlackenqualität eingesetzt.

Veränderungen in der Brennstoffzusammensetzung, das heißt auch Veränderungen im Abfall bzw. Müll hinsichtlich des Heizwertes, führen bei der Verbrennung zwangsläufig zu Schwankungen sowohl in der Zusammensetzung des Abgases als auch in Bezug auf die Menge desselben. Die Schwankung der Abgasmenge ist unerwünscht, weil der Saugzug bei der Auslegung und bei dem Betrieb einer Verbrennungsanlage die maximal mögliche Schwankung berücksichtigen muss, was eine entsprechend unwirtschaftliche Auslegung der Sauggebläse zur Folge hat. Die Schwankung des Sauerstoffgehaltes im Abgas führt dazu, dass bei einer kurzzeitigen Erhöhung des Heizwertes des beschickten Brennstoffgemisches ein Mangel an Sauerstoff auftritt und es hierdurch zu erhöhten Gehalten an CO oder anderen Produkten unvollständiger Verbrennung im Abgas kommt (CO-Spitzen). Deswegen muss bei Verwendung inhomogener Brennstoffe die Anlage mit hohen Luftüberschüssen ausgelegt und betrieben werden. Hohe Luftüberschüsse führen aber zu einer erhöhten Abgasmenge, was nicht nur eine Vergrößerung der Sauggebläse, sondern auch eine Vergrößerung der nachgeschalteten Abgasreinigungsanlagen erfordert.

Eine kurzzeitige Erhöhung des Heizwertes des beschickten Brennstoffgemisches führt zu einer Verstärkung des negativen Effekts der Abgasschwänkungen, wobei eine frühe Zündung des Brennstoffgemisches, eine erhöhte Reaktionsrate, das heißt erhöhte Verbrennungsintensität und Wärmefreisetzung pro Zeiteinheit, eine Verringerung des Luftüberschusses und ein Anstieg der Gastemperatur die Folge sind. Dies führt zu unstabilen Verhältnissen, wobei sich dieser Effekt besonders stark auswirkt, wenn mit Sauerstoff angereicherter Umgebungsluft als Primärverbrennungsgas gefahren wird. Der erhöhte Sauerstoffanteil führt zu einer insgesamt intensiveren Verbrennung und einem schnelleren Zünden des Brennstoffes nach der Beschickung. Erfolgt dabei eine kurzzeitige Erhöhung des Heizwertes des beschickten Brennstoffgemisches, kann aufgrund dieser intensiven Verbrennungsreaktion trotz Sauerstoffanreicherung der Sauerstoffverbrauch so stark ansteigen, dass zumindest lokal Verbrennungsbedingungen mit Sauerstoffmangel eintreten. Solche Instabilitäten bzw. Schwankungen im Verbrennungsablauf sind wegen der weiter oben erläuterten Auswirkungen äußerst unerwünscht.

Ein gattungsgemäßes Verfahren ist aus der WO2003083370A1 bekannt.

Aufgabe der Erfindung ist es, den Verbrennungsablauf trotz schwankender Heizwerte aufgrund von schwankenden Brennstoffzusammensetzungen zu stabilisieren.

Diese Aufgabe wird ausgehend von einem Verfahren der eingangs erläuterten Art erfindungsgemäß dadurch gelöst, dass zur Erhöhung des Sauerstoffmassenstroms im Sekundärverbrennungsgas die Umgebungsluft oder internes Rezirkulationsgas auf einer Eindüsebene in einer Höhe von etwa 6 bis 9 Meter oberhalb des Rostes so zugegeben wird, dass die Verweilzeiten des Abgases vom Brennbett bis zu dieser Ebene 1 bis 3 Sekunden betragen.

Grundsätzlich wird dieser Regelungseffekt durch Veränderung der Zusammensetzung hinsichtlich des Sauerstoffgehaltes im Primärverbrennungsgas und im Sekundärverbrennungsgas unter weitgehender Beibehaltung der Massenströme dieser Verbrennungsgase bzw. durch Änderungen der Massenströme bei einem Primärverbrennungsgas und Sekundärverbrennungsgas oder durch Kombination beider Maßnahmen erzielt.

Durch die Verringerung des Sauerstoffgehaltes bei im Wesentlichen gleich bleibender Masse des Primärverbrennungsgases wird erreicht, dass bei kurzzeitiger Beschickung von heizwertreicheren Brennstoffgemischen eine zu rasche Zündung und folglich eine erhöhte Reaktionsrate und Wärmefreisetzung pro Zeiteinheit vermieden werden. Durch die reduzierte Zufuhr von Sauerstoff mittels des Primärverbrennungsgases ist außerdem der Brennstoffumsatz limitiert und es finden vorwiegend Vergasungsreaktionen und weniger Verbrennungsreaktionen statt. Dies führt zur Abkühlung der Primärverbrennungszone und weiteren Verlangsamungen des Brennstoffumsatzes.

Als Primärverbrennungszone wird hier der Raum zwischen dem Rost und den untersten Sekundärgasdüsenebenen bezeichnet.

Die entsprechende Erhöhung des Sauerstoffgehaltes im Sekundärverbrennungsgas bei im Wesentlichen gleichbleibender Sekundärverbrennungsgasmasse erleichtert dann ergänzend den zuverlässigen Ausbrand der im Feuerraum aufsteigenden Vergasungsprodukte.

Der hier beschriebene Sauerstoffausgleich zwischen Primär- und Sekundärverbrennungsgas führt dann in der Summe zu einer Dämpfung der durch den inhomogenen Brennstoff verursachten Schwankungen in der Abgaszusammensetzung und ermöglicht somit eine Absenkung des Luftüberschusses. Auf diese Weise kann eine Verbrennungsanlage auch mit inhomogenem Brennstoff und einem Sauerstoffüberschuss kleiner 1,5 betrieben werden, ohne dass CO-Spitzen im Abgas aufgrund der Beschickung von zeitweise heizwertreicheren Brennstoffzusammensetzungen auftreten.

Vorzugsweise erfolgt die Regelung in der Weise, dass eine zeitweise Erhöhung des Sauerstoffmassenstromes in dem Sekundärverbrennungsgas im Wesentlichen einer zeitweisen Absenkung des Sauerstoffmassenstromes in dem Primärverbrennungsgas entspricht. Hierdurch wird insbesondere auf die Beibehaltung gleicher Abgasmengen eingewirkt.

Zur Feststellung des Ausmaßes der Erhöhung der Reaktionsrate bzw. Verbrennungsintensität wird mindestens einer der nachfolgenden Parameter, nämlich die Temperatur des Brennbettes, die Temperatur, der Sauerstoffgehalt, der CO₂-Gehalt und der CO-Gehalt im Abgas gemessen und diese Messwerte werden zur Regelung des Sauerstoffmassenstromes in dem Primärverbrennungsgas und dem Sekundärverbrennungsgas verwendet. Die Messung der Temperatur des Brennbettes erfolgt vorzugsweise mit einer Infrarotkamera in der Decke des Feuerraums. Die Messung der Temperatur sowie des 02-, CO₂- und CO-Gehalt im Abgas wird vorzugsweise mit in-situ Messgeräten durchgeführt, zum Beispiel basierend auf Absorption von Laser-Licht, die es erlauben schnelle Signale im Feuerraum zu erzeugen. Weiterhin geeignet sind auch optische Kameras, die eine Messung der Temperaturverteilung im Feuerräum ermöglichen.

Diese erfindungsgemäße Regelung stützt sich selbstverständlich auf die Erfassung der entscheidenden Werte beim Primärverbrennungsgas und beim Sekundärverbrennungsgas hinsichtlich Massenstromzusammensetzung und Temperatur. Diese Werte müssen beim Betrieb einer Verbrennungsanlage ohnehin erfasst werden, so dass es auf der Basis dieser Informationen möglich ist, die entsprechenden Veränderungen beim Primärverbrennungsgas und beim Sekundärverbrennungsgas abhängig von der Reaktionsrate bzw. der Verbrennungsintensität vorzunehmen.

Bei der Durchführung des erfindungsgemäßen Verfahrens können unterschiedliche Zusammensetzungen hinsichtlich des Primärverbrennungsgases und des Sekundärverbrennungsgases gewählt werden.

Grundsätzlich ist es, wie bereits bekannt, möglich, als Primärverbrennungsgas Umgebungsluft oder mit Sauerstoff angereicherte Umgebungsluft zu verwenden, die auch in den meisten Fällen vorgewärmt wird. Dabei ist es vorteilhaft, wenn der Sauerstoffgehalt im Primärverbrennungsgas über 21 % liegt.

Bei dem Sekundärverbrennungsgas kann es sich um Umgebungsluft, welche als Sekundärverbrennungsluft bezeichnet wird, internes Rezirkulationsgas, das an einer Stelle des Brennraumes abgezogen wird, wo noch ein hoher Anteil an Sauerstoff besteht, Abgasrezirkulationsgas, das am Austritt des Kessels oder weiter stromabwärts am Austritt der Abgasreinigungsanlagen abgezogen wird, sowie Mischungen aus den genannten Bestandteilen handeln.

In weiterer Ausgestaltung der Erfindung ist es zweckmäßig, dass oberhalb der Primärverbrennungszone gereinigtes Abgasrezirkulationsgas zur Homogenisierung und Abkühlung in den Abgasstrom eingeführt wird. Die Umgebungsluft oder das interne Abgasrezirkulationsgas wird auf einer Eindüsebene in einer Höhe von etwa 6 bis 9 Meter oberhalb des Rostes zuzugeben, so dass die Verweilzeiten des Abgases vom Brennbett bis zu dieser Ebene 1 bis 3 Sekunden betragen. Hierdurch erreicht man einen Gewinn an Zeit für die Regelung, die erfindungsgemäß zum Beispiel auf eine erhöhte Verbrennungsintensität mit einer Erhöhung des Sauerstoffgehaltes im Sekundärverbrennungsgas so reagiert, dass entstandenes CO noch ausgebrannt werden kann.

Der Sauerstoffausgleich, entsprechend dem Grundgedanken der Erfindung zwischen Primärverbrennungsgas und Sekundärverbrennungsgas, kann durch Verringerung der Primär- verbrennungsgasmenge und durch Erhöhung der Sekundär- verbrennungsgasmenge erfolgen, da durch die Mengenerhöhung bzw. Mengenreduzierung unabhängig von dem jeweils gerade herrschenden Sauerstoffanteil der Sauerstoffmassenstrom verändert wird. Der Sauerstoffausgleich zwischen Primärverbrennungsgas und Sekundärverbrennungsgas kann aber auch durch Verringerung des Sauerstoffanteiles in dem Primärverbrennungsgas und Erhöhung des Sauerstoffanteiles in mindestens einem Bestandteil des Sekundärverbrennungsgases erfolgen. Bei dieser Maßnahme bleiben die jeweiligen Gasmengen konstant, jedoch wird der Sauerstoffgehalt in den jeweiligen Gasmengen verändert.

Der Sauerstoffausgleich zwischen Primärverbrennungsgas und Sekundärverbrennungsgas kann auch durch Regelung der Menge an zugeführtem internem Rezirkulationsgas erfolgen. Diese Maßnahme bewirkt nämlich, dass in der Primärverbrennungszone Primärverbrennungsgas abgezogen wird, was dort zu einer Verminderung des Sauerstoffmassenstroms und damit zu einer Verminderung der Reaktionsrate führt. Die Regelung der Menge an abgezogenem internen Rezirkulationsgas hat also indirekt eine Auswirkung auf die Größe des Sauerstoffmassenstromes, der in der Primärverbrennungszone zur Verfügung gestellt und durch Veränderung der Menge des internen Rezirkulationsgases beeinflusst wird und zwar dahingehend, dass bei Erhöhung der Menge des internen Rezirkulationsgases der Primärverbrennungszone Primärverbrennungsgas und damit Sauerstoff entzogen wird.

In vorteilhafter Weise erfolgt die Erhöhung des Sauerstoffes im Sekundärverbrennungsgas in einem erhöhten Turbulenzbereich. Dies ist nicht nur dann besonders vorteilhaft, wenn ein örtlich gezielter Sauerstoffausgleich aufgrund konstruktiver Gegebenheiten nicht möglich ist, sondern auch dann, wenn ein Ausgleich der Sauerstoffmassenströme unmittelbar im Bereich der Entstehung einer Erhöhung der Verbrennungsintensität erfolgt, weil auch hier sichergestellt wird, dass insbesondere CO-Strähnen nicht unbeeinflusst vorbeiwandern können.

Das Sekundärverbrennungsgas wird vorzugsweise in einem Bereich dem Feuerraum zugeführt, wo erhöhte Turbulenz durch eine Verengung des Feuerraumes erreicht wird.

Es kann auch vorteilhaft sein, die verschiedenen Teile des Sekundärverbrennungsgases in verschiedenen Höhen über der Brennschicht zuzuführen, weil hier gezielt bestimmte Veränderungen herbeigeführt werden können. So ist es beispielsweise vorteilhaft, das interne Rezirkulationsgas an einer anderen Stelle zuzuführen als das gereinigte Abgas, das weniger zur Sauerstoffmassenregelung als zur Erzielung einer bestimmten Turbulenz eingeführt wird. Das interne Rezirkulationsgas wird vorzugsweise an einer höheren Stelle als das gereinigte Abgasrezirkulationsgas zugeführt, wobei diesem internen Rezirkulationsgas gegebenenfalls Umgebungsluft beigemischt werden kann.

Die Erfindung wird nachfolgend anhand eines schematisch dargestellten Ausführungsbeispieles einer Verbrennungsanlage näher erläutert.

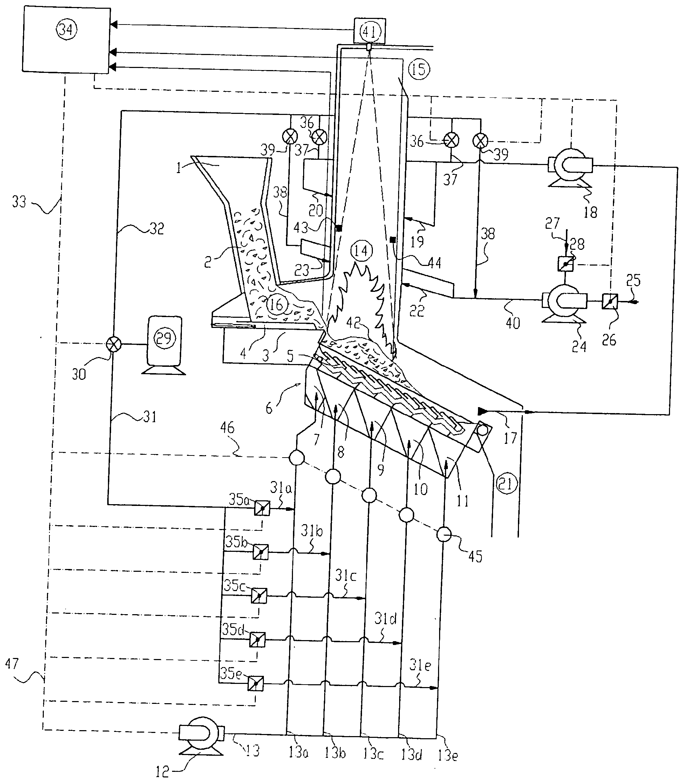

Die einzige Figur der Zeichnung zeigt einen schematischen Aufbau einer Müllverbrennungsanlage mit Rückschubrost und den verschiedenen Möglichkeiten einer Primärverbrennungsgasbeeinflussung und einer Sekundärverbrennungsgasbeeinflussung.

Entsprechend der zeichnerischen Darstellung weist eine Feuerungsanlage zur Durchführung des erläuterten Verfahrens einen Aufgabetrichter 1 mit anschließender Aufgabeschurre 2, für die Aufgabe des Brennstoffes auf einen Aufgabetisch 3 auf, auf dem Beschickkolben 4 hin- und her bewegbar vorgesehen sind, um den aus der Aufgabeschurre kommenden Brennstoff auf einen Feuerungsrost 5 aufzugeben, auf dem die Verbrennung des Brennstoffes stattfindet. Hierbei ist es unerheblich, ob es sich um einen geneigten oder horizontal liegenden Rost, egal welchen Prinzips, handelt.

Das nachstehend erläuterte Verfahren kann auch, beispielsweise bei einer Wirbelschichtverbrennungsanlage, zur Anwendung kommen, die in der Zeichnung allerdings nicht dargestellt ist.

Unterhalb des Verbrennungsrostes 5 ist eine insgesamt mit 6 bezeichnete Einrichtung zur Zuführung von Primärverbrennungsgas angeordnet, die mehrere Kammern 7 bis 11 umfassen kann, denen mittels eines Gebläses 12 über eine Leitung 13 Primärverbrennungsgas in Form von Umgebungsluft zugeführt wird. Durch die Anordnung der Kammern 7 bis 11 ist der Feuerungsrost in mehrere Unterwindzonen unterteilt, so dass das Primärverbrennungsgas, entsprechend den Bedürfnissen auf dem Feuerungsrost, unterschiedlich eingestellt werden kann. Diese Unterwindzonen können je nach Breite des Feuerungsrostes auch in Querrichtung unterteilt sein, so dass entsprechend den örtlichen Gegebenheiten die Primärverbrennungsgaszufuhr geregelt werden kann.

Über dem Feuerungsrost 5 befindet sich der Feuerraum 14, der im oberen Teil in einen Abgaszug 15 übergeht, an den sich nicht dargestellte Aggregate, wie zum Beispiel ein Abziehkessel und eine Abgasreinigungsanlage anschließen.

Die Verbrennung des mit 16 bezeichneten Brennstoffes erfolgt auf dem vorderen Teil des Feuerungsrostes 5, über dem sich der Abgaszug 15 befindet. In diesem Bereich wird durch die Kammern 7, 8 und 9 das meiste Primärverbrennungsgas zugeführt. Auf dem hinteren Teil des Feuerungsrostes 5 befindet sich nur ausgebrannter Brennstoff, das heißt Schlacke und diesem Bereich wird Primärverbrennungsgas über die Kammern 10 und 11 im wesentlichen nur zur Kühlung dieser Schlacke zugeführt. Aus diesem Grunde weist das Abgas in dem hinteren Bereich des Feuerungsraumes einen, gegenüber dem vorderen Bereich, erhöhten Sauerstoffgehalt auf, so dass dieses Abgas als internes Rezirkulationsgas für die Sekundärverbrennung benutzt werden kann, wenn dies die entsprechenden Gegebenheiten erfordern.

Hierfür ist eine Absaugleitung 17 vorgesehen, die zu einem Sauggebläse 18 führt, welches das Rezirkulationsgas zu Sekundärverbrennungsdüsen 19 und 20 führt, die an gegenüber liegenden Stellen, aber auch an dazwischen liegenden Stellen des Abgaszuges angeordnet sind.

Die ausgebrannten Teile des Brennstoffes fallen dann in einen Schlackenaustrag 21 am Ende des Feuerungsrostes 5.

Weitere Sekundärverbrennungsgasdüsen 22 und 23 sind ebenfalls in größerer Anzahl auf den Umfang des Abgaszuges 15 verteilt. Hier kann Sekundärverbrennungsgas in Form von Umgebungsluft eingespeist werden, die mittels eines Gebläses 24 gefördert wird. Hierfür ist eine Ansaugleitung 25 vorgesehen, wobei ein Regelorgan 26 die Umgebungsluftmenge einzustellen gestattet. Eine weitere mit dem Gebläse 24 verbundene Leitung 27, die durch ein Regelorgan 28 überwacht wird, dient zum Ansaugen von gereinigtem Abgasrezirkulationsgas, welches der Umgebungsluft zugemischt wird. Dieses gereinigte Abgasrezirkulationsgas wird nach Durchströmen des Abgases durch die Abgasreinigungsanlage abgesaugt und weist einen, gegenüber dem internen Rezirkulationsgas, niedrigeren Sauerstoffgehalt auf. Dieses Abgasrezirkulationsgas dient in erster Linie zur Turbulenzerzeugung, wenn die Abgasmenge im Abgaszug 15 zu gering ist, um genügende Turbulenz zur Verbesserung der Verbrennung im Sekundärbereich zu erzeugen.

Aus einer Luftzerlegungsanlage 29 wird über eine Förder- und Verteileinrichtung 30 reiner Sauerstoff einerseits in eine Leitung 31 zur Beimischung zum Primärverbrennungsgas und andererseits in eine Leitung 32 zum Beimischen zum Sekundärverbrennungsgas gefördert. Der entsprechende Regelbefehl kommt über eine Leitung 33 von einer zentralen und kombinierten Regel- und Rechnereinheit 34, deren Aufgabe weiter unten noch näher erläutert wird. Über die Leitung 31 werden Abzweigleitungen 31a bis 31e versorgt, die durch Ventile 35a bis 35e überwacht sind und die ebenfalls von der Regel- und Rechnereinheit 34 beeinflusst werden. Die Zuführungsleitungen 31a bis 31e münden in Abzweigleitungen 13a bis 13e, die von der Leitung 13 für Umgebungsluft abzweigen und zu den einzelnen Unterwindkammern 7 bis 11 führen.

Die zweite Leitung 32, die von der Förder- und Verteileinrichtung 30 ausgeht, führt über Regelventile 36 und Leitungen 37 zu den Sekundärverbrennungsgasdüsen 19 und 20, über die internes Rezirkulationsgas in den Verbrennungsraum eingeführt wird. Über Abzweigleitungen 38, die über Regelventile 39 überwacht sind, können den Sekundärverbrennungsgasdüsen 22 und 23 Sauerstoff zugeführt werden, denen über eine Leitung 40 vom Gebläse 24 Sekundärverbrennungsgas zugeführt wird. Dieses kann entweder reine Umgebungsluft oder Umgebungsluft, gemischt mit gereinigtem Abgas, umfassen.

Eine Thermographiekamera 41 beobachtet durch die Rauchgase hindurch die Oberfläche des Brennbettes 42 und die dabei aufgenommenen Werte werden an die zentrale Rechner- und Regeleinheit 34 weitergeleitet. Mit 43 und 44 sind Sensoren bezeichnet, von denen mehrere über der Oberfläche der Brennbettschicht 42 angeordnet sind und die zur Messung des O₂, CO- und CO₂-Gehaltes im Abgas oberhalb des Brennbettes 42, also in der Primärverbrennungszone dienen.

Zur Erhöhung der Übersichtlichkeit sind alle Leitungen, die zur Verteilung von Strömungsmedien dienen oder die erfasste Daten weiterleiten, mit ausgezogenen Linien dargestellt, während Leitungen, die Regelbefehle übertragen, mit gestrichelten Linien dargestellt sind.

Das erfindungsgemäße Regelverfahren wird nachstehend erläutert.

Wenn in einem bestimmten Bereich des Feuerungsrostes 5 eine Erhöhung der Verbrennungsintensität, bedingt durch das Vorhandensein von besonders leicht entflammbarem Brennstoff mit hohem Heizwert, die Thermographiekamera 41 eine erhöhte Temperatur auf der Brennbettoberfläche 42 feststellt und wenn dabei mittels der Sensoren 43 und 44 einerseits eine Absenkung des Sauerstoffgehaltes und/oder andererseits eine Erhöhung des CO-Gehaltes festgestellt werden, so werden diese Daten der zentralen Regeleinheit 34 zugeleitet, die einen Sauerstoffmassenstromausgleich zwischen dem Primärverbrennungsgas und dem Sekundärverbrennungsgas durchführt. Dabei wird von der jeweiligen Stelle über mindestens eine der Abzweigleitungen 13a bis 13e die Primärgasmenge gedrosselt, wobei hier eine Absenkung der Sauerstoffmassenstrom eintritt, sofern das Primärverbrennungsgas aus Umgebungsluft besteht. Die einzelnen Regeleinrichtungen in den Abzweigleitungen 13a bis 13e sind mit dem Bezugszeichen 45 versehen und werden über Regelleitungen 46 beeinflusst, die von der Leitung 33 abzweigen, welche in der Praxis als Sammelleitung ausgeführt ist. Über eine Regelleitung 47 kann auch die Leistung des Gebläses 12 für die Umluft insgesamt abgesenkt werden. Sofern der Umgebungsluft über die Leitungen 31a bis 31e reiner Sauerstoff zugeführt wird, so kann diese Sauerstoffzufuhr mittels der Ventile 35a bis 35e abgesenkt werden, wobei diese Regelventile über entsprechende Steuerleitungen mit der Sammelleitung 33 und somit mit der zentralen Regeleinheit 34 verbunden sind.

Gleichzeitig mit der Absenkung des Sauerstoffmassenstroms im Primärverbrennungsgas geht ein entsprechender Sauerstoffausgleich durch Erhöhung des Sauerstoffmassenstromes im Sekundärverbrennungsgasbereich einher. Hierzu wird ausgehend von der Förder- und Verteileinrichtung 30 über die Leitung 32 Sauerstoff, geregelt über die Ventile 36, entweder dem internen Rezirkulationsgas, das über die Düsen 19 und 20 eingeführt wird oder geregelt über die Ventile 39, dem Sekundärverbrennungsgas zugeführt, das in Form von Umgebungsluft oder in Form eines Gemisches bestehend aus Umgebungsluft und gereinigtem Abgas, vorliegt. Erfindungsgemäß wird die Zuführung des Sekundärverbrennungsgases, über welches der Sauerstoffausgleich auf einer Eindüsebene in einer Höhe von etwa 6 bis 9 Meter oberhalb des Rost erfolgt, so durchgeführt, dass die Verweilzeiten des Abgases vom Brennbett bis zu dieser Ebene 1 bis 3 Sekunden betragen.

Zudem ist es zweckmäßig, wenn vorher eine Homogenitätszone im Abgaszug geschaffen wird, die durch Zuführung von gereinigtem Abgas in turbulenter Form erzeugt wird. Über dieser Homogenitätszone wird dann das Sekundärverbrennungsgas mit dem geänderten Sauerstoffmassenstrom zugeführt, wobei es vorteilhaft ist, wenn bei Zuführung von internem Rezirkulationsgas dieses an Stellen mit besonders hoher Turbulenz und damit mit besonders gesteigerter Homogenität eingebracht wird. Bei dieser Betriebsweise übernimmt die Homogenisierungszone eine zusätzliche Homogenisierung und damit Verbrennung von CO, weil auch durch eine größere Zahl von Zuführungsdüsen für Sekundärverbrennungsgas nicht immer ausgeschlossen werden kann, dass sich einzelne CO-Strähnen bilden, die durch die erste Sekundärverbrennungsgaszuführung unbeeinflusst nach oben steigen.

## Patentansprüche

1. Verfahren zum Verbrennen von Brennstoffen, insbesondere Abfall, bei dem Primärverbrennungsgas von unten in die Brennstoffschicht und Sekundärverbrennungsgas oberhalb der Brennstoffschicht dem Abgasstrom zugeführt wird und bei Eintritt einer Erhöhung der Reaktionsrate bzw. Verbrennungsintensität der Sauerstoffmassenstrom des Primärverbrennungsgases gesenkt und der Sauerstoffmassenstrom des Sekundärverbrennungsgases erhöht wird, ***dadurch gekennzeichnet, dass*** zur Erhöhung des Sauerstoffmassenstroms im Sekundärverbrennungsgas die Umgebungsluft oder internes Rezirkulationsgas auf einer Eindüsebene in einer Höhe von etwa 6 bis 9 Meter oberhalb des Rostes so zugegeben wird, dass die Verweilzeiten des Abgases vom Brennbett bis zu dieser Ebene 1 bis 3 Sekunden betragen.

2. Verfahren nach Anspruch 1, ***dadurch gekennzeichnet, dass*** eine zeitweise Erhöhung des Sauerstoffmassenstromes in dem Sekundärverbrennungsgas im Wesentlichen einer zeitlichen Absenkung des Sauerstoffmassenstromes in dem Primärverbrennungsgas entspricht.

3. Verfahren nach Anspruch 1 oder 2, ***dadurch gekennzeichnet, dass*** zur Feststellung der Erhöhung der Verbrennungsintensität mindestens einer der nachfolgenden Parameter, nämlich die Temperatur des Brennbettes, die Temperatur, der Sauerstoffgehalt, der C02-Gehalt und der CO-Gehalt im Abgas gemessen werden und diese Messwerte zur Regelung des Sauerstoffmassenstromes in dem Primärverbrennungsgas und dem Sekundärverbrennungsgas verwendet werden.

4. Verfahren nach einem der Ansprüche 1 bis 3, ***dadurch gekennzeichnet, dass*** der Sauerstoffgehalt im Primärverbrennungsgas über 21 % liegt.

5. Verfahren nach einem der Ansprüche 1 bis 4, ***dadurch gekennzeichnet, dass*** das Sekundärverbrennungsgas Umgebungsluft umfasst.

6. Verfahren nach einem der Ansprüche 1 bis 4, ***dadurch gekennzeichnet, dass*** das Sekundärverbrennungsgas internes Rezirkulationsgas umfasst, das an einer Stelle des Brennraumes abgezogen wird, wo noch ein ausreichend hoher Anteil an Sauerstoff besteht.

7. Verfahren nach einem der Ansprüche 1 bis 4, ***dadurch gekennzeichnet, dass*** das Sekundärverbrennungsgas gereinigtes Abgasrezirkulationsgas umfasst.

8. Verfahren nach einem der Ansprüche 1 bis 4, ***dadurch gekennzeichnet, dass*** das Sekundärverbrennungsgas zum Teil Umgebungsluft, zum Teil gereinigtes Abgasrezirkulationsgas und zum Teil internes Rezirkulationsgas umfasst.

9. Verfahren nach einem der Ansprüche 1 bis 8, ***dadurch gekennzeichnet, dass*** oberhalb der Primärverbrennungszone gereinigtes Abgasrezirkulationsgas zur Homogenisierung und Abkühlung in den Abgasstrom eingeführt wird.

10. Verfahren nach einem der Ansprüche 1 bis 9, ***dadurch gekennzeichnet, dass*** der Sauerstoffausgleich zwischen Primärverbrennungsgas und Sekundärverbrennungsgas durch Verringerung der Primärverbrennungsgasmenge und durch Erhöhung der Sekundärverbrennungsgasmenge erfolgt.

11. Verfahren nach einem der Ansprüche 1 bis 10 ***dadurch gekennzeichnet, dass*** der Sauerstoffausgleich zwischen Primärverbrennungsgas und Sekundärverbrennungsgas durch Verringerung des Sauerstoffanteiles in dem Primärverbrennungsgas und Erhöhung des Sauerstoffanteiles in mindestens einem Bestandteil des Sekundärverbrennungsgases erfolgt.

12. Verfahren nach einem der Ansprüche 1 bis 11, ***dadurch gekennzeichnet, dass*** der Sauerstoffausgleich zwischen Primärverbrennungsgas und Sekundärverbrennungsgas durch Regelung der Menge an zugeführtem internen Rezirkulationsgas erfolgt.

13. Verfahren nach einem der Ansprüche 1 bis 12, **dadurch gekennzeichnet, dass** die Erhöhung der Sauerstoffmenge im Sekundärverbrennungsgas in einem erhöhten Turbulenzbereich erfolgt.

14. Verfahren nach einem der Ansprüche 1 bis 13, ***dadurch gekennzeichnet, dass*** das Sekundärverbrennungsgas in einem Bereich dem Feuerraum zugeführt wird, wo erhöhte Turbulenz durch eine Verengung des Feuerraumes erreicht wird.

15. Verfahren nach einem der Ansprüche 1 bis 14, ***dadurch gekennzeichnet, dass*** die verschiedenen Teile des Sekundärverbrennungsgases in verschiedenen Höhen über der Brennstoffschicht zugeführt werden.

## Claims

1. A method for the combustion of fuels, particularly waste, in which primary combustion gas is supplied into the fuel layer from below and secondary combustion gas is supplied to the exhaust gas stream above the fuel layer and is lowered when an increase occurs in the reaction rate or combustion intensity of oxygen mass of the primary combustion gas and the oxygen mass flow of the secondary combustion gas is increased, ***characterized in that*** in order to increase the oxygen mass flow in the secondary combustion gas, the ambient air or internal recirculation gas is added at an injection level at a height of roughly 6 to 9 metres above the grate, in such a manner that the dwell times of the exhaust gas from the combustion bed up to this level are 1 to 3 seconds.

2. The method according to claim 1, ***characterized in that*** a temporary increase in the oxygen mass flow in the secondary combustion gas substantially corresponds to a temporary drop in the oxygen mass flow in the primary combustion gas.

3. The method according to claim 1 or 2, ***characterized in that*** in order to determine the increase in combustion intensity of at least one of the following parameters, namely the temperature of the combustion bed, the temperature, the oxygen content, the CO2 content and the CO content in the exhaust gas are measured and these measured values are used for regulating the oxygen mass flow in the primary combustion gas and in the secondary combustion gas.

4. The method according to one of claims 1 to 3, ***characterized in that*** the oxygen content in the primary combustion gas is more than 21%.

5. The method according to one of claims 1 to 4, ***characterized in that*** the secondary combustion gas comprises ambient air.

6. The method according to one of claims 1 to 4, ***characterized in that*** the secondary combustion gas comprises internal recirculation gas, which is withdrawn at a location in the combustion chamber where there is still a sufficiently high proportion of oxygen.

7. The method according to one of claims 1 to 4, ***characterized in that*** the secondary combustion gas comprises purified exhaust gas recirculation gas.

8. The method according to one of claims 1 to 4, ***characterized in that*** the secondary combustion gas in part comprises ambient air, in part purified exhaust gas recirculation gas and in part internal recirculation gas.

9. The method according to one of claims 1 to 8, ***characterized in that*** purified exhaust gas recirculation gas is introduced into the exhaust gas flow above the primary combustion zone for homogenization and cooling.

10. The method according to one of claims 1 to 9, ***characterized in that*** the oxygen balance between the primary combustion gas and secondary combustion gas is achieved by reducing the amount of primary combustion gas and by increasing the amount of secondary combustion gas.

11. The method according to one of claims 1 to 10, ***characterized in that*** the oxygen balance between the primary combustion gas and secondary combustion gas is achieved by reducing the proportion of oxygen in the primary combustion gas and increasing the proportion of oxygen in at least one constituent of the secondary combustion gas.

12. The method according to one of claims 1 to 11, ***characterized in that*** the oxygen balance between the primary combustion gas and secondary combustion gas is achieved by controlling the amount of internal recirculation gas supplied.

13. The method according to one of claims 1 to 12, ***characterized in that*** the increase in the amount of oxygen in the secondary combustion gas is carried out in an increased turbulence region.

14. The method according to one of claims 1 to 13, ***characterized in that*** the secondary combustion gas is supplied in a region of the combustion chamber where increased turbulence is achieved by a constriction of the combustion chamber.

15. The method according to one of claims 1 to 14, ***characterized in that*** the various parts of the secondary combustion gas are supplied at different heights above the fuel layer.

## Revendications

1. Procédé destiné à incinérer des combustibles, notamment des déchets, lors duquel on amène au flux de gaz de fumée du gaz de combustion primaire par le dessous, dans la couche de combustible et du gaz de combustion secondaire au-dessus de la couche de combustible et à l'intervention d'une augmentation du taux de réaction ou de l'intensité de l'incinération, on baisse le flux massique d'oxygène du gaz de combustion primaire et on augmente le flux massique d'oxygène du gaz de combustion secondaire, ***caractérisé en ce que**,* pour augmenter le flux massique d'oxygène dans le gaz de combustion secondaire, on ajoute l'air ambiant ou du gaz de recirculation interne sur un niveau d'injection à une hauteur d'environ 6 à 9 mètres au-dessus de la grille, de telle sorte que les temps de séjour des gaz de fumée du lit de combustion jusqu'audit niveau soient de 1 à 3 secondes.

2. Procédé selon la revendication 1, ***caractérisé en ce qu'*** une augmentation intermittente du flux massique d'oxygène dans le gaz de combustion secondaire correspond sensiblement à une baisse temporaire du flux massique d'oxygène dans le gaz de combustion primaire.

3. Procédé selon la revendication 1 ou la revendication 2, ***caractérisé en ce que*** pour constater l'augmentation de l'intensité de l'incinération, on mesure au moins l'un des paramètres suivants, à savoir la température du lit de combustion, la température, la teneur en oxygène, la teneur en CO₂ et la teneur en CO dans les gaz de fumée et on utilise lesdites valeurs de mesure pour la régulation du flux massique d'oxygène dans le gaz de combustion primaire et le gaz de combustion secondaire.

4. Procédé selon l'une quelconque des revendications 1 à 3, ***caractérisé en ce que*** la teneur en oxygène dans le gaz de combustion primaire est supérieure à 21 %.

5. Procédé selon l'une quelconque des revendications 1 à 4, ***caractérisé en ce que*** le gaz de combustion secondaire comprend de l'air ambiant.

6. Procédé selon l'une quelconque des revendications 1 à 4, ***caractérisé en ce que*** le gaz de combustion secondaire comprend des gaz de recirculation interne, que l'on soutire en un endroit de la chambre de combustion où il reste une part encore suffisamment élevée d'oxygène.

7. Procédé selon l'une quelconque des revendications 1 à 4, ***caractérisé en ce que*** le gaz de combustion secondaire comprend des gaz de recirculation épurés des gaz de fumée.

8. Procédé selon l'une quelconque des revendications 1 à 4, ***caractérisé en ce que*** le gaz de combustion secondaire comprend en partie de l'air ambiant, en partie des gaz de recirculation épurés des gaz de fumée et en partie des gaz de recirculation interne.

9. Procédé selon l'une quelconque des revendications 1 à 8, ***caractérisé en ce que*** pour l'homogénéisation et le refroidissement, au-dessus de la zone de combustion primaire, on introduit dans le flux de gaz de fumée des gaz de recirculation épurés des gaz de fumée.

10. Procédé selon l'une quelconque des revendications 1 à 9, ***caractérisé en ce que*** l'équilibrage d'oxygène entre le gaz de combustion primaire et le gaz de combustion secondaire s'effectue par réduction de la quantité de gaz de combustion primaire et par augmentation de la quantité de gaz de combustion secondaire.

11. Procédé selon l'une quelconque des revendications 1 à 10, ***caractérisé en ce que*** l'équilibrage d'oxygène entre le gaz de combustion primaire et le gaz de combustion secondaire s'effectue par réduction de la part d'oxygène dans le gaz de combustion primaire et par augmentation de la part d'oxygène dans au moins un composant du gaz de combustion secondaire.

12. Procédé selon l'une quelconque des revendications 1 à 11, ***caractérisé en ce que*** l'équilibrage d'oxygène entre le gaz de combustion primaire et le gaz de combustion secondaire s'effectue par régulation de la quantité des gaz de recirculation interne amenés.

13. Procédé selon l'une quelconque des revendications 1 à 12, ***caractérisé en ce que*** l'augmentation de la quantité d'oxygène dans le gaz de combustion secondaire s'effectue dans une région de turbulences élevées.

14. Procédé selon l'une quelconque des revendications 1 à 13, **caractérisé en ce qu'**on amène le gaz de combustion secondaire dans une région de la chambre de combustion où une turbulence élevée est obtenue par rétrécissement de la chambre de combustion.

15. Procédé selon l'une quelconque des revendications 1 à 14, ***caractérisé en ce qu'**on* amène les différentes parties du gaz de combustion secondaire à différentes hauteurs au-dessus le couche de combustible.
